Europäisches Patentamt

**European Patent Office**

**Office européen des brevets**

(11) Publication number: **0 045 541**
**A1**

# EUROPEAN PATENT APPLICATION

(21) Application number: **81200813.4**

(22) Date of filing: **15.07.81**

(51) Int. Cl.³: **F 16 L 21/08**
**F 16 L 23/02**

(30) Priority: **19.07.80 GB 8023682**

(43) Date of publication of application:
**10.02.82 Bulletin 82/6**

(84) Designated Contracting States:
**AT BE CH DE FR GB IT LI LU NL SE**

(71) Applicant: **BRIAN BATE ENGINEERING LIMITED**
**41 Station Road**
**Billingham Cleveland TS23 1AB(GB)**

(72) Inventor: **Bate, Brian**
**82 Station Road**
**Billingham County Cleveland(GB)**

(72) Inventor: **Duncan, Alexander William**
**7 The Avenue Fairfield**
**Stockton-on-Tees County Cleveland(GB)**

(74) Representative: **Denmark, James**
**c/o Bailey Walsh & Co. 5 York Place**
**Leeds LS1 2SD Yorkshire(GB)**

(54) **Pipe coupling.**

(57) The invention provides a coupling for coupling pipe sections (10,12) end to end the coupling including a loose restraining ring (52) which does not function until the coupling is put under a stress which tends to move the pipe section ends axially apart, in which case abutment surfaces of the ring engage abutment surfaces (54) fast with the respective pipe section ends, thereby to limit other movement of the pipe section axially apart. The ring is preferably of U-shape and cross section, with the limbs of the U-shape extending inwards, and the ring may have slots or cut outs alternating from the respective sides in order to improve the flexibility and expansibility of the ring.

FIG. 1

-1-

## Pipe Coupling

This invention relates to pipe couplings, and seeks to provide a simple and effective means for the provision of a coupling between pipe ends, one of which may be flanged, whereby the said coupling can permit to a limited extent, relative angling and axial displacement of the pipe ends in use. Such displacement in the form of tilting or axial displacement may arise due to thermal and/or pressure effects depending upon the fluent material which is being carried by the pipeline containing the said pipes.

The present invention is concerned with the provision of a simple and effective means for preventing the joint from failing.

This invention was made arising out of the inefficiency of existing pipe joints used in the pipelines for conveying pulverised fuel to power station boilers, because the existing couplings previously used for coupling pipe sections of a pipeline carrying pulverised fuel at a relatively low pressure are unable to cope with the modern high pressure demands. Currently, the pulverised fuel supply lines are expected to carry fluent pulverised fuel at a pressure of the order of 750 lbs per square inch.

The existing joint comprises essentially a pair of clamp rings which are urged together by means of tension bolts, and the clamp rings compress flexible packing rings into frictional engagement with the outer surfaces of the pipeline sections to be coupled. Using these couplings in pipelines carrying pulverised fuel at a pressure of the order of 750 lbs per square inch resulted in that the pipe ends simply "blew out" of the couplings. To rectify this problem, the rather crude solution of welding brackets or flanges to respective pipe lengths and coupling these flanges or brackets with large tension bolts, was adopted. However, to meet the high internal pressures, these extra tension bolts had to be of disproportionate size in relation to the wall thickness of the pipe sections being coupled thereby. In any event, the resulting shackles, comprising the brackets and flanges and the additional tension bolts allow freedom of relative tilting movement only to a limited extent and only in one direction, and the shackles are obtrusive and often take up space which could otherwise be used.

The present invention seeks to overcome these problems in a simple and effective manner, and in accordance with the invention a coupling for coupling pipe sections end to end includes a restraining ring which is a loose fit in a cavity and defines abutment surfaces which will be engaged by respective coupling parts in the event of the pipe sections moving axially apart.

The ring may simply be of square or rectangular cross section with the side surfaces serving as the abutment means, or it may be of Z-configuration comprising two radial sections which are axially offset, and are connected by an axial section, but we prefer that the ring should be of U-section, with the limbs of the U-section extending radially inwards, so that the said limbs can locate in circumferential grooves in respective coupling parts. By the use of a U-section ring, an extremely simple and effective coupling ring is provided, which can take the strain of pressure or thermal forces tending to move the pipe sections apart.

The said grooves may be formed in extension sections adapted respectively to be welded to the pipe ends to be coupled, and the coupling would conveniently be provided with a conventional means for providing a fluid seal around each of the said extension sections.

The ring will preferably be adapted so as to have a degree of resilience to enable the ring to take up any of an infinite number of distorted positions to provide the best restraining effect preventing separation of the pipe ends, and with this objective in view, the ring may have slots or cut outs extending alternately from the respective sides of the ring, but of course not completely across the width of the ring. The ring furthermore may be a complete or partial ring, and in the latter case it may be formed from a strip of metal rolled to curved configuration so that it can snap into position in the coupling. It could be a continuous ring when provided with said slots or cutouts, because then it would be capable of expansion into position in the coupling.

In another aspect of the invention, in the light of the above, the invention provides a coupling ring (which may be partial or complete) for the purposes aforesaid, and which is provided with slots or cutouts in order to give the ring a greater degree of resiliency, and in addition an expansion capability.

By so constructing the ring in this fashion, it can be seen that when the coupling is required to yield as a result of relative angling of the pipe sections, the ring will yield to such an extent to ensure that the ring will perform a restraining function over a reasonably large angular extent, rather than to provide point restraining as could be the case if the ring were solid. Clearly it is more desirable that the ring should exercise a restraining effect over the maximum angular distance, but when there is relative tilting of the pipe sections, then the restraining effect will exist of course only at one side of the coupling.

The invention can be applied in any circumstances requiring the coupling of pipe ends, regardless of the fluent material being carried by the pipe line in which the coupling is located, and although we describe in the following embodiments the use of a ring in a coupling, coupling pipe sections on the one hand having no flanges, and on the other hand having one flange, it is believed that by suitable adaptation the invention can be applied to the coupling of pipe ends, each of which is provided with a coupling flange.

Embodiments of the invention will now be described, by way of example, with reference to the accompanying drawings, wherein:-

Fig. 1 is a sectional elevation of a symmetrical half of a coupling according to a first embodiment of the invention; and

Figs. 2, 3 and 4 respectively are views similar to Fig. 1, showing second, third and fourth embodiments of the present invention.

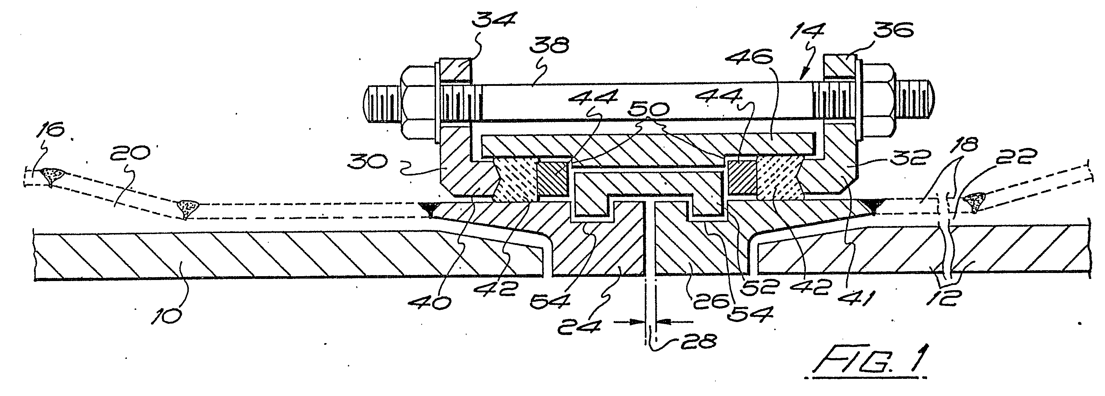

Referring firstly to Fig. 1, a pair of pipe sections 10 and 12 have their ends sealingly connected by means of a coupling 14. The said pipe sections may be shrouded by means of a mild steel casing tube 16 and 18 respectively. In the annular space 20 and 22 between the pipe sections 10, 12 and casings 16, 18 there may be suitable grouting material. This form of construction of pipe is known for use in connection with the delivery of pulverised fuel to power station boilers. The pipe sections 10 and 12 are in alignment, and are sealingly connected by means of the coupling 14. The coupling comprises a pair of coupling rings 24 and 26 which are welded to the casings 16 and 18 as shown, the opposite faces of the rings 24 and 26 being spaced by the clearance 28. The inner diameters of the rings 24, 26 correspond to the end diameters of sections 10 and 12, and in this example the rings 24 and 26 are of mild steel.

Two flange rings 30 and 32 are of L-shaped cross section, and radially extending portions 34, 36 are coupled by means of tension bolts 38.

The axial legs 40, 41 of the flange rings 30 and 32 bear upon flexible packing seals 42, the other sides of said packing rings 42 being supported by support rings 44. A cover ring 46 surrounds the packing and support rings 42 and 44, and provides support shoulders 50 against which the support rings 44 seat. It will be understood that tightening of the tension bolts 38 causes axial compression of the packing seals 42, so that they are distorted radially inwards and into frictional sealing contact with the outer surfaces of the flange rings 24 and 26.

In accordance with the embodiment of the present invention, there is provided in addition a U-sectioned tension ring 52, arranged so that the limbs of the U are directed radially inwards. These limbs are a loose fit in retension grooves 54 formed in the flanges 24 and 26 as shown. The ring 52, which may be a complete or partial ring, functions to restrain the ends of the pipe sections 10 and 12 from moving apart by too great an amount to cause loss of sealing or fracture of the joint. The operation of the ring is self explanatory from the drawing in that if the ends of the sections 10 and 12 tend to move apart, so the limbs of the ring 52 bear upon the sides of the grooves 34, and the ring restrains further relative displacement of the flange rings 24 and 26.

If the sections 10 and 12 are angled relatively, as frequently happens in use due to pressure and/or thermal effects, the retention ring 52 will act to prevent the sections 10 and 12 from spreading apart too much at one side of the joint.    If the ring 52 is solid, possibly the contact with the flange rings 24 and 26 would in effect be point contact, but in accordance with another aspect of the invention, the ring 52 is slotted or has cut outs, said slots or cut outs extending alternately from the respective sides of the ring, but of course not completely transversing the ring, so that the ring has the capability of flexing and shaping itself elastically to provide maximum retention contact with the sides of the grooves 54 in the rings 24 and 26.    The utilisation of the ring 52 provides an extremely effective means for preventing excessive spread of the ends of the pipe sections 10 and 12 under pressure and/or thermal conditions, the presence of which would conventionally require additional tension bolt shackles, as hereinbefore described, welded to the casings 16 and 18.

The rings 24 and 26, the ring 52, the ring 46 and the rings 44 may be for example of mild steel, but it is to be pointed out that the invention in this and in the other embodiments is not to be considered as being limited to any particular material.    Materials will be selected depending upon the application.

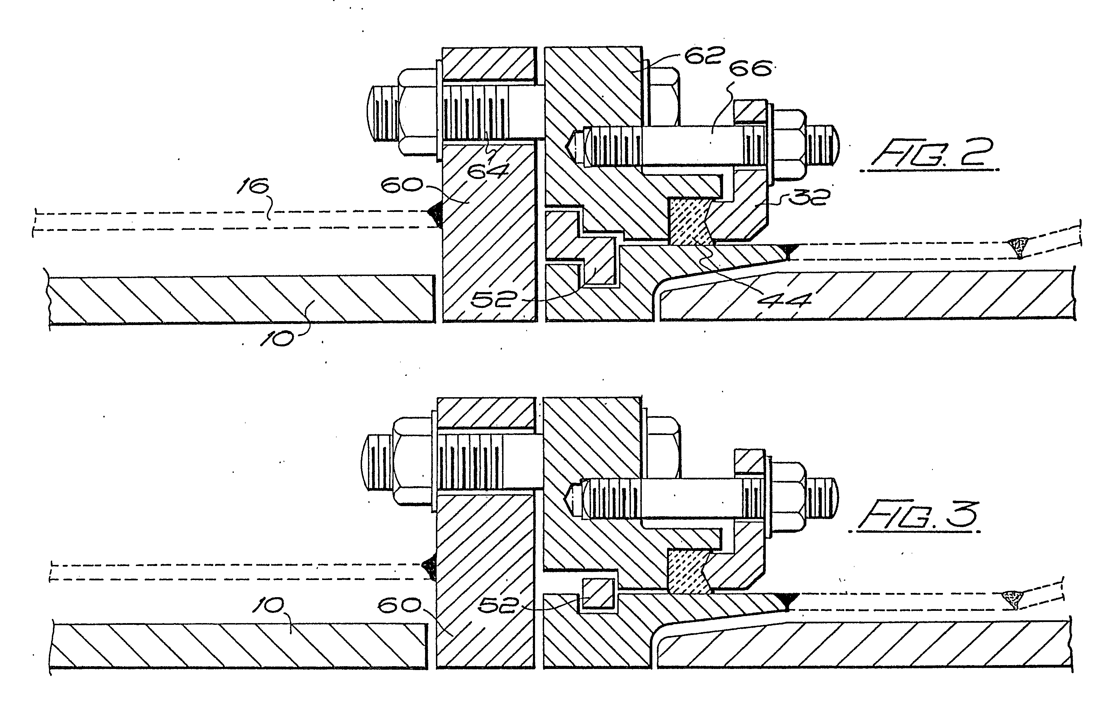

In the arrangement shown in Fig. 2, the pipe section 10 is provided with a radial flange 60, and therefore the retention ring 52 in accordance with the present invention is of slightly different configuration, and in fact is of Z configuration having two sections which lie radially and connected by an axially extending section.    Only one packing seal 44 is provided, and only one flange ring 32 is provided, a coupling ring 62 providing the means whereby the packing seal 44 is compressively clamped, and also the means whereby the flange 60 is coupled to the flange ring 32, by means of bolts 64 and 66. The principle operation is as described in relation to Fig. 1.

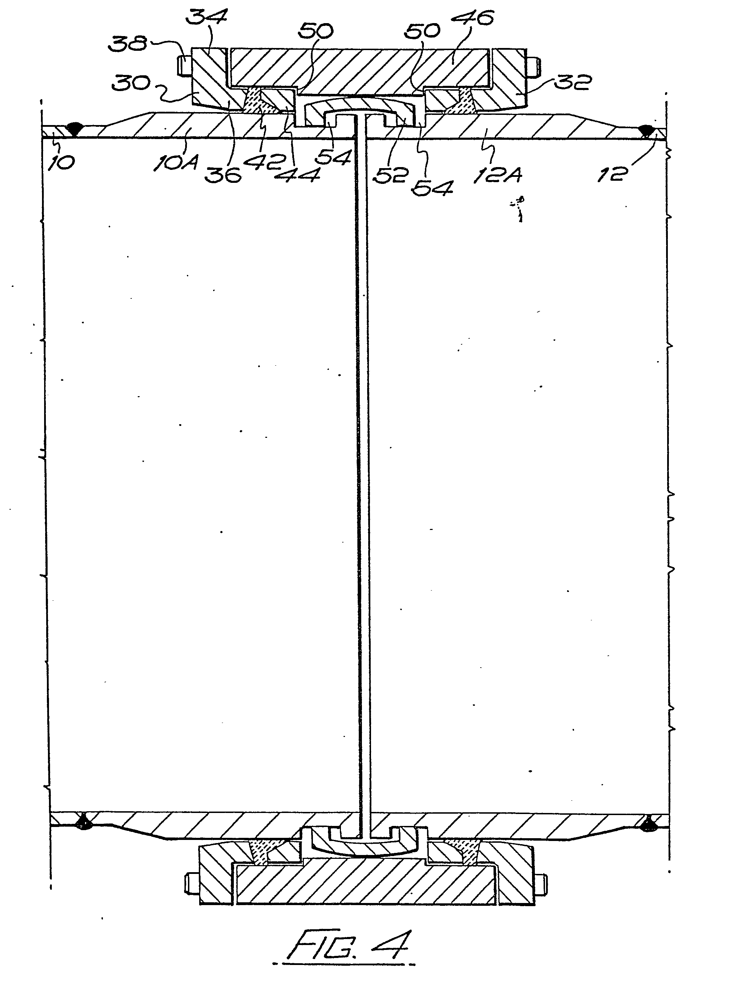

The embodiment shown in Fig. 3 differs from that shown in Fig. 2, in that the ring 52 is of square cross-section, but it performs the same function as the ring 52 in the Figs. 1 and 2 embodiments. The Fig. 3 embodiment is more similar to the Fig. 2 embodiment in that the pipe section 10 is again provided with flange 60.

The embodiments shown in Figs. 1, 2 and 3 are primarily for use in connection with the delivery of pulverised fuel, but Fig. 4 shows a more general type of coupling, which can be used in any suitable pipework. The construction of the coupling shown in Fig. 4 is essentially the same as that shown in Fig. 1, except that the pipe sections 10 and 12 do not have the casings and grouting as previously described, and the coupling flanges 24 and 26 are replaced by pipe extension 10A and 12A which respectivley are welded to the sections 10 and 12, the sections 10A and 12A having the said grooves 54 receiving the limbs of the retaining ring 52. The base portion of the retaining ring 52 is curved as shown. The other components illustrated in Fig. 4 have the same reference numerals as the corresponding components which have already been described in relation to Fig. 1.

It will be noticed that in each case, the retention ring 52 is a loose fit in an appropriate cavity means within the coupling, and the ring only comes into retaining effect when the coupling tends to be put under stress as a result of movement of the pipe sections 10 and 12 apart. This retention ring therefore performs the same function as the welded shackle hereinbefore described, but the design is much more flexible than the prior art method.

The ring 52 with the aforesaid slotting or cutouts may be designed to be sprung into position as shown in any of the embodiments.

The embodiment shown in Fig. 4 has wide application, and we would propose that arrangements such as shown in Fig. 4 could be supplied, including the extension pieces 10A and 12A ready to be connected to the ends of pipes to be coupled in a fluid type fashion. In each case, the coupling is designed to couple the ends of pipes in a pipeline carrying fluid under pressure. Instead of welding the ends of the sections 10A and 10B to the sections 10 they may be brazed or otherwise secured.

CLAIMS

1. A coupling for coupling pipe sections end to end including a restraining ring which is a loose fit in a cavity and defines abutment surfaces which will be engaged by respective coupling parts connected to the said pipe section ends in the event of the pipe sections moving axially apart.

2. A coupling according to claim 1, wherein the ring is of square or rectangular cross section with the side surfaces serving as the abutment means.

3. A coupling according to claim 1, wherein the ring is of Z-configuration in cross section, comprising two radial sections which are axially offset, and are connected by an axial section.

4. A coupling according to claim 1, wherein the ring is U-shaped in cross section with the limbs of the U-section extending radially inwards so that the said limbs locate in circumferential grooves in respective coupling parts.

5. A coupling according to claim 4, wherein the said grooves are formed in extension sections of a coupling which are adapted to be welded to the pipe ends.

6. A coupling according to claim 4 or 5, wherein the ring is adapted to have a degree resilience to enable the ring to take up any of an infinite number of distorted positions to provide the best restraining effect preventing separation of the pipe ends.

7. A coupling according to claim 6, wherein the ring has slots or cut outs extending alternately from the respective sides of the ring.

8. A coupling according to claim 4, 5, 6 or 7, wherein the ring is a complete or partial ring, and in the latter case is formed from a strip of metal rolled to curved configuration, so that it can snap into position in the coupling.

9. A coupling according to claim 8, wherein the ring is a closed continuous ring and is capable of being expanded to be fitted into position in the coupling.

10. A coupling according to any preceding claim, wherein the coupling is provided with conventional means for providing a fluid seal around each of the pipe section ends.

11. A coupling for coupling pipe sections end to end substantially as hereinbefore described with reference to the accompanying drawings.

12. A coupling ring for use in a coupling according to any one of the preceding claims, said coupling ring being provided with cut outs or slots to give the ring a greater degree of resiliency, and in addition an expansion capability.

BAILEY, WALSH & CO.,
Chartered Patent Agents,
5 York Place,
Leeds. LS1 2SD

Agents for the Applicants

FIG. 1

0045541

FIG. 2

FIG. 3

FIG. 4

| | | | |
|---|---|---|---|
| **European Patent Office** | **EUROPEAN SEARCH REPORT** | Application number | |
| | | EP 81 20 0813 | |

| **DOCUMENTS CONSIDERED TO BE RELEVANT** | | | **CLASSIFICATION OF THE APPLICATION (Int Cl.³)** |
|---|---|---|---|
| Category | Citation of document with indication, where appropriate, of relevant passages | Relevant to claim | |
| X | GB - A - 904 710 (THE STANTON IRON WORKS COMP. LTD)<br><br>* Figures *<br><br>-- | 1,2,10,<br>11 | F 16 L 21/08<br>23/02 |
| X | US - A - 1 888 260 (CLARK)<br><br>* Figures *<br><br>-- | 1,2,10,<br>11 | |
| | US - A - 1 622 768 (COOK)<br><br>* Page 1, lines 45-60; figures *<br><br>-- | 1,4,8,<br>10,11 | **TECHNICAL FIELDS SEARCHED (Int. Cl.³)** |
| | GB - A - 253 581 (COOK)<br><br>* Page 1, lines 46-62; figures *<br><br>-- | 1,4,5,<br>8,10,<br>11 | F 16 L<br>F 23 K |
| | DE - A - 2 650 371 (WAVIN B.V.)<br><br>* Page 8, lines 9-19; figures *<br><br>-- | 1,2,5,<br>6,8,<br>10,11 | |
| | FR - A - 2 002 186 (METALLVERKEN ESSEM PLAST. AB)<br><br>* Figures *<br>& GB - A - 1 262 733<br><br>---- | 1,6,8,<br>9,10,<br>11 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | | | |
|---|---|---|---|
| | The present search report has been drawn up for all claims | | |
| Place of search | Date of completion of the search | Examiner | |
| The Hague | 22-10-1981 | HUBEAU | |

EPO Form 1503 1   06.78